# EUROPEAN PATENT APPLICATION

(11) **EP 4 715 391 A1**
(43) Date of publication of application: **25.03.2026**
(21) Application number: 24810929.0
(22) Date of filing: 10.05.2024
(51) Int. Cl.: G01N 35/10, G01N 1/00

(54) **AUTOMATIC ANALYSIS DEVICE**

(30) Priority: 19.05.2023 JP 2023083063
(71) Applicant: HITACHI HIGH-TECH CORPORATION, Tokyo 105-6409 (JP)
(72) Inventor: MATSUOKA Shinya, Tokyo 105-6409 (JP); KOBAYASHI Miyuki, Tokyo 105-6409 (JP)
(74) Representative: MERH-IP Matias Erny Reichl Hoffmann Patentanwälte PartG mbB
(86) International application number: PCT/JP2024/017482
(87) International publication number: WO 2024/241921

(57) **Abstract**

Provided is an automatic analyzer capable of accurately detecting an abnormality during aspiration even when an amount of a reagent used for analysis is small. An automatic analyzer includes: a dispensing mechanism configured to dispense a reagent from a reagent container to a reaction container; a control unit configured to control the dispensing mechanism to aspirate an amount of the reagent used for analysis, the amount including at least a second predetermined amount in addition to a first predetermined amount, then discharge the second predetermined amount of the reagent to the reagent container, and then discharge the first predetermined amount of the reagent to the reaction container; and a pressure sensor configured to measure pressure in the dispensing mechanism. The control unit determines whether the reagent is normally aspirated based on a measurement value of the pressure sensor when the dispensing mechanism aspirates the reagent. When the first predetermined amount is equal to or larger than a first predetermined amount threshold value that is predetermined in advance, the second predetermined amount is a constant value regardless of the first predetermined amount. When the first predetermined amount is smaller than the first predetermined amount threshold value, the second predetermined amount is larger than the constant value.

## Description

### Technical Field

The present invention relates to an automatic analyzer.

### Background Art

An automatic analyzer for analyzing a biological sample such as blood or urine includes a dispensing mechanism for dispensing a sample or a reagent into a reaction container. The dispensing mechanism aspirates or discharges a reagent or the like by operating a syringe connected to a nozzle through a flow path, and a pressure sensor is installed in the flow path. In relation to such a dispensing mechanism, PTL 1 discloses a technique of detecting a dispensing abnormality by comparing a difference between a pressure sensor output immediately before the start of an aspiration operation and a pressure sensor output during the aspiration operation with a threshold value (pressure threshold value).

### Citation List

### Patent Literature

PTL 1: JP2007-315984A

### Summary of Invention

### Technical Problem

However, when an aspiration amount is small, the difference between the pressure sensor output immediately before the start of the aspiration and the pressure sensor output during the aspiration operation is small, and thus the pressure threshold value needs to be small. In this case, it is difficult to distinguish between a normal state and a normal state, and erroneous detection is likely to occur.

The invention has been made in view of such problems, and an object of the invention is to provide an automatic analyzer capable of accurately detecting an abnormality during aspiration even when an amount of a reagent used for analysis is small.

### Solution to Problem

In order to solve the above problems, the invention provides an automatic analyzer. The automatic analyzer includes: a dispensing mechanism configured to dispense a reagent from a reagent container to a reaction container; a control unit configured to control the dispensing mechanism to aspirate an amount of the reagent used for analysis, the amount including at least a second predetermined amount in addition to a first predetermined amount, then discharge the second predetermined amount of the reagent to the reagent container, and then discharge the first predetermined amount of the reagent to the reaction container; and a pressure sensor configured to measure pressure in the dispensing mechanism. The control unit determines whether the reagent is normally aspirated based on a measurement value of the pressure sensor when the dispensing mechanism aspirates the reagent. When the first predetermined amount is equal to or larger than a first predetermined amount threshold value that is predetermined in advance, the second predetermined amount is a constant value regardless of the first predetermined amount, and when the first predetermined amount is smaller than the first predetermined amount threshold value, the second predetermined amount is larger than the constant value.

### Advantageous Effects of Invention

Provided is an automatic analyzer capable of accurately detecting an abnormality during aspiration even when an amount of a reagent used for analysis is small.

### Brief Description of Drawings

[FIG. 1] FIG. 1 is a diagram schematically showing an overall configuration of an automatic analyzer.
[FIG. 2] FIG. 2 is a diagram schematically showing a flow channel configuration of a reagent dispensing mechanism and a reagent bottle.
[FIG. 3] FIG. 3 is a diagram showing an example of an operation sequence for reagent dispensing.
[FIG. 4] FIG. 4 is a flowchart showing a method for determining empty aspiration.
[FIG. 5] FIG. 5 is a flowchart showing a method for adjusting a reagent aspiration amount.
[FIG. 6A] FIG. 6A is a diagram showing an example (comparative example) when the reagent aspiration amount is not adjusted.
[FIG. 6B] FIG. 6B is a diagram showing an example (embodiment) when the reagent aspiration amount is adjusted.
[FIG. 7] FIG. 7 is a diagram showing an example of a method for setting a pressure threshold value for determining the empty aspiration.

### Description of Embodiments

Hereinafter, embodiments of the invention will be described with reference to the drawings.

### (Overall Configuration of Automatic Analyzer)

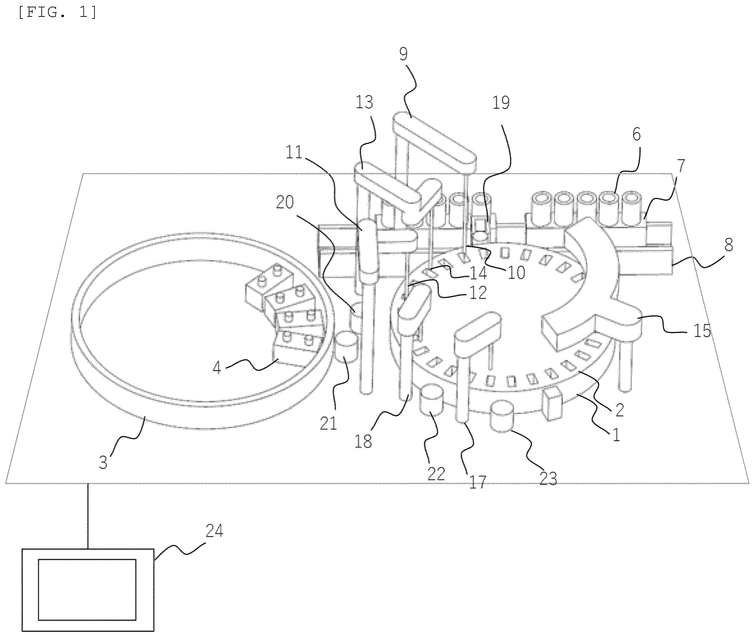

An automatic analyzer is a device that dispenses a sample such as blood or urine and a reagent into a reaction container 2 to cause the sample and the reagent to react with each other, and that measures a liquid obtained by reacting the reagent and the sample. FIG. 1 is a diagram schematically showing an overall configuration of an automatic analyzer. As shown in FIG. 1, the automatic analyzer includes a sample transport mechanism 8, a reagent disk 3, a reaction disk 1, a sample dispensing mechanism 9, reagent dispensing mechanisms 11 and 13, mixing mechanisms 17 and 18, a cleaning mechanism 15, a control unit 24, and the like.

The reaction containers 2 are arranged circumferentially on the reaction disk 1. The reaction container 2 is a container for storing a mixed liquid obtained by mixing a sample and a reagent, and a plurality of the reaction containers 2 are arranged on the reaction disk 1. The sample transport mechanism 8 is disposed near the reaction disk 1, and the sample transport mechanism 8 transports a sample rack 7 mounted with a plurality of sample containers 6 each containing a sample to be analyzed. The reaction container 2 is immersed below a reaction bath filled with a thermally conductive medium (for example, constant-temperature water) whose temperature is controlled to, for example, 37°C, and the temperature of the reaction container 2 is constantly maintained at 37°C by circulating the constant-temperature water in the reaction bath.

A plurality of reagent bottles 4 (reagent containers) each containing a reagent to be used for analysis can be placed on the circumference of the reagent disk 3, and the reagent disk 3 also has a function serving as a cooler for cooling the reagent bottles 4.

The sample dispensing mechanism 9 for dispensing a sample from the sample container 6 to the reaction container 2 is disposed between the reaction disk 1 and the sample transport mechanism 8. The sample dispensing mechanism 9 is rotatable in a horizontal direction and movable in an upper-lower direction, and includes a sample nozzle 10 having a tip end facing downward. A cleaning tank 19 for cleaning the sample nozzle 10 with cleaning water is disposed in an operating range of the sample dispensing mechanism 9. The reagent dispensing mechanism 11, 13 for dispensing a reagent from the reagent bottle 4 to the reaction container 2 is disposed between the reaction disk 1 and the reagent disk 3. The reagent dispensing mechanism 11, 13 is rotatable in the horizontal direction and movable in the upper-lower direction, and the reagent dispensing mechanisms 11 and 13 respectively include reagent nozzles 12 and 14 each having a tip end facing downward. Cleaning tanks 20 and 21 for respectively cleaning the reagent nozzles 12 and 14 with cleaning water are disposed in operating ranges of the reagent dispensing mechanisms 11 and 13.

The mixing mechanisms 17 and 18, a spectrophotometer for measuring absorbance of a reaction liquid by measuring light from a light source (not shown) transmitted through the reaction liquid in the reaction container 2, the cleaning mechanism 15 for cleaning the used reaction container 2, and the like are disposed around the reaction disk 1.

The mixing mechanisms 17 and 18 are rotatable in the horizontal direction and movable in the upper-lower direction, and stir a mixed liquid (reaction liquid) of the sample and the reagent by being inserted into the reaction container 2. Cleaning tanks 22 and 23 for cleaning the mixing mechanisms 17 and 18 with cleaning water are disposed in operating ranges of the mixing mechanisms 17 and 18.

The control unit 24 is implemented by a computer or the like, controls an operation of each mechanism constituting the automatic analyzer, and executes calculation processing for obtaining a concentration of a predetermined component in the sample. In FIG. 1, a connection relationship between each mechanism constituting the automatic analyzer and the control unit 24 is omitted for simplicity of the drawing.

In the automatic analyzer configured as described above, analysis processing is generally executed in the following flow. First, the control unit 24 controls the sample nozzle 10 of the sample dispensing mechanism 9 to dispense a sample in the sample container 6 placed on the sample rack 7, the sample container 6 being transported to the vicinity of the reaction disk 1 by the sample transport mechanism 8, into the reaction container 2 on the reaction disk 1. Thereafter, the control unit 24 cleans the sample nozzle 10 in the cleaning tank 19. Next, the control unit 24 controls the reagent nozzle 12, 14 of the reagent dispensing mechanism 11, 13 to dispense a reagent in the reagent bottle 4 on the reagent disk 3 into the reaction container 2 into which the sample was previously dispensed. Thereafter, the control unit 24 cleans the reagent nozzles 12 and 14 in the cleaning tanks 20 and 21.

Subsequently, the control unit 24 stirs a mixed liquid of the sample and the reagent in the reaction container 2 by the mixing mechanisms 17 and 18. Thereafter, light generated from a light source is transmitted through the reaction container 2 containing the mixed liquid, and the control unit 24 controls the spectrophotometer to measure an intensity of the transmitted light. Light intensity information measured by the spectrophotometer is transmitted to the control unit 24 via an A/D converter and an interface. Then, the control unit 24 calculates a concentration of a predetermined component of an analysis item based on the received light intensity information, and displays a calculation result on a display unit (not shown) or the like or stores the calculation result in a storage unit (not shown) .

### (Configuration of Reagent Dispensing Mechanism)

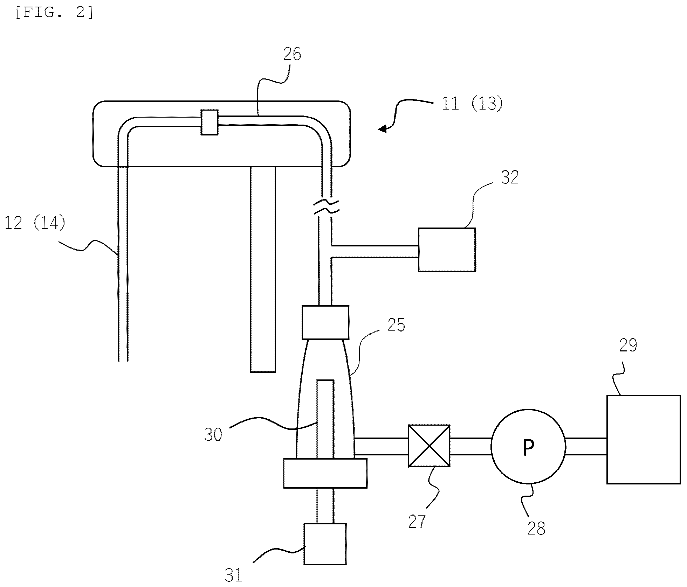

Next, a configuration of the reagent dispensing mechanism 11, 13 will be specifically described with reference to FIG. 2.

FIG. 2 is a diagram schematically showing a flow path configuration of the reagent dispensing mechanism and the reagent bottle. The reagent dispensing mechanism 11, 13 mainly includes the reagent nozzle 12, 14 and a syringe 25, and dispenses a reagent in the reagent bottle 4 into a reaction container by operating the syringe 25 coupled to the reagent nozzle 12, 14. Here, the syringe 25 is provided with a plunger 30, and a motor 31 is coupled to the plunger 30. The motor 31 drives the plunger 30 to aspirate or discharge a reagent to be dispensed from the reagent nozzle 12, 14.

A flow path from the reagent nozzle 12, 14 to a water supply pump 29 via the syringe 25, an electromagnetic valve 27, and a liquid feeding pump 28 is formed by a tube 26, and the flow path is filled with system water. The system water is water used for pressure propagation or the like, and is generally purified water such as ion exchange water. When an inner side of the reagent nozzle 12, 14 is cleaned, the electromagnetic valve 27 is opened, and the system water (cleaning water) supplied from the water supply pump 29 is discharged from a tip end of the reagent nozzle 12, 14. The pressure sensor 32 is connected in a form of branching from an intermediate portion of a flow path from the reagent nozzle 12, 14 to the syringe 25, and pressure in the flow path can be measured.

When the reagent dispensing mechanism 11, 13 dispenses a reagent, first, the reagent nozzle 12, 14 is moved to a position (reagent aspirating position) where the reagent is aspirated from the reagent bottle 4 while maintaining a state where the electromagnetic valve 27 is closed. Next, in a state where the tip end of the reagent nozzle 12, 14 reaches a liquid surface of the reagent, the plunger 40 is driven in an aspiration direction to draw the reagent into the reagent nozzle 12, 14. Thereafter, the reagent nozzle 12, 14 is moved to a position (reagent discharge position) where the reagent is discharged into the reaction container 2, and in this state, the plunger 40 is driven in a discharge direction to discharge the reagent into the reaction container 2. After the reagent dispensing mechanism 11, 13 dispenses the reagent, the reagent nozzle 12, 14 is moved to the cleaning tank 20, 21, and inner cleaning and outer cleaning of the reagent nozzle 12, 14 are performed.

### (Reagent Dispensing Operation)

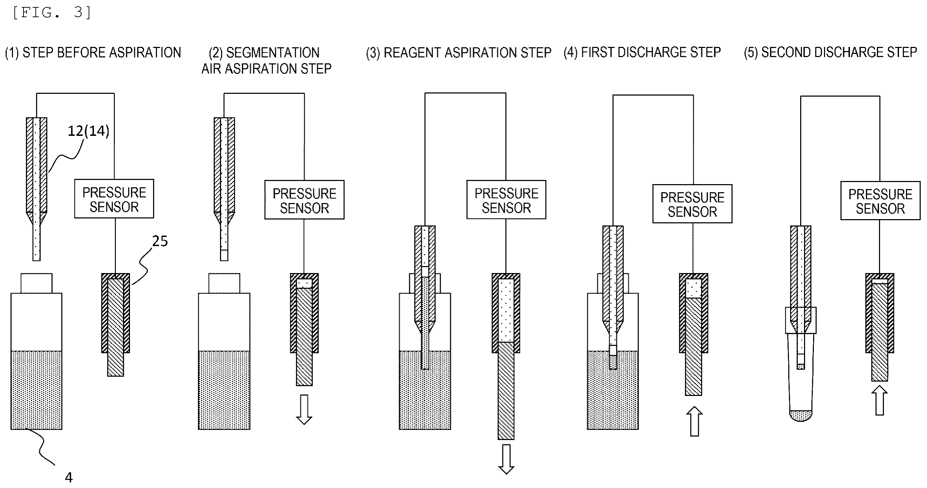

Next, details of an operation of reagent dispensing will be described with reference to FIG. 3. FIG. 3 is a diagram showing an example of an operation sequence for reagent dispensing. Unlike from FIG. 2, a configuration of the reagent dispensing mechanism is simplified in FIG. 3.

First, in (1) step before dispensing, the control unit 24 moves the reagent nozzle 12, 14 subjected to inner cleaning and outer cleaning to a position above the reagent bottle 4 that is the reagent aspirating position. At this time, the reagent nozzle 12, 14 is filled with system water used for inner cleaning.

Next, in (2) segmentation air aspiration step, the control unit 24 operates the syringe 25 in the aspiration direction to aspirate segmentation air. The segmentation air is air that separates the system water and the reagent, and serves as an air layer that prevents the reagent from being diluted due to contact between the reagent and the system water during reagent aspiration.

Next, in (3) reagent aspiration step, the control unit 24 lowers the reagent nozzle 12, 14 to the reagent aspirating position, and operates the syringe 25 in the aspiration direction to aspirate the reagent in a state where the reagent nozzle 12, 14 is immersed below a liquid surface in the reagent bottle 4. At this time, an amount of the aspirated reagent includes a second predetermined amount to be discharged back to the reagent bottle 4 in (4) first discharge step to be described later, in addition to a first predetermined amount which is an amount to be discharged to the reaction container 2 in
(5) second discharge step to be described later (that is, an amount to be used for analysis). Further, the amount of the aspirated reagent in the (3) reagent aspiration step includes not only the first predetermined amount and the second predetermined amount but also a third predetermined amount which is a dummy amount to be excessively aspirated to prevent the reagent from being diluted by the system water remaining in the reagent nozzle 12, 14. The third predetermined amount varies depending on a total value of the first predetermined amount and the second predetermined amount, and the third predetermined amount increases as the total value increases. In the (3) reagent aspiration step, the pressure sensor 32 measures pressure in a flow path in a predetermined time range during the aspiration operation of the syringe 25, and stores the pressure in a storage unit (not shown).

Next, in the (4) first discharge step, the control unit 24 operates the syringe 25 in the discharge direction to discharge a part of the reagent in the reagent nozzle 12, 14 in a state where the reagent nozzle 12, 14 is immersed below the liquid surface in the reagent bottle 4. The second predetermined amount, which is a discharge amount of the reagent in the (4) first discharge step, includes a syringe operation amount (backlash discharge amount) required to cancel backlash generated in the process of transition from the (3) reagent aspiration step to the (4) first discharge step. Here, the backlash is a minute idle rotation generated when an operation direction of the syringe 25 is reversed due to a gap existing between mechanisms constituting the syringe 25.

Next, the control unit 24 raises the reagent nozzle 12, 14, horizontally moves the reagent nozzle 12, 14 to a position above the reaction container 2 which is the reagent discharge position, and then lowers the reagent nozzle 12, 14 again. Thereafter, in the (5) second discharge step, the control unit 24 operates the syringe 25 in the discharge direction to discharge a part of the reagent remaining in the reagent nozzle 12, 14 into the reaction container 2. The first predetermined amount, which is a discharge amount of the reagent in the (5) second discharge step, corresponds to an amount of the reagent required for actual analysis. In the (5) second discharge step, since the syringe 25 operates in the same direction as the immediately preceding discharge operation, it is not necessary to consider backlash, and it is possible to accurately discharge the required reagent amount.

When the (5) second discharge step is completed, the third predetermined amount of reagent, which is a dummy amount, remains in the reagent nozzle 12, 14. However, thereafter, when the reagent nozzle 12, 14 is moved to the cleaning tank 20, 21 and the inner side of the reagent nozzle 12, 14 is cleaned, the third predetermined amount of reagent is discharged to the cleaning tank 20, 21 together with the cleaning water by the cleaning water supplied from the liquid feeding pump 28.

### (Abnormality Determination during Aspiration)

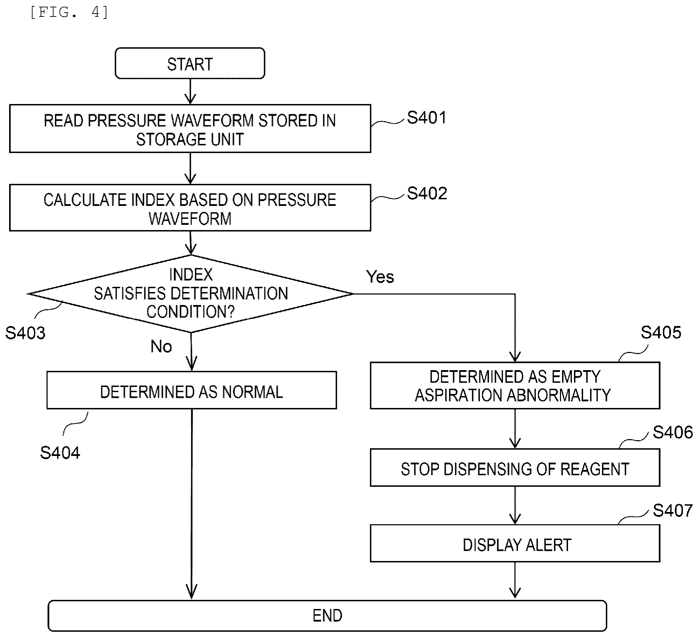

Next, a method for determining an abnormality during aspiration will be specifically described with reference to FIG. 4. Here, empty aspiration in which aspiration of the reagent by the dispensing mechanism is insufficient will be described as an example of an aspiration abnormality to be determined. In addition, a state in which the dispensing mechanism is clogged with reagent, a state in which bubbles are mixed in the dispensing mechanism, or the like may be a target to be determined.

FIG. 4 is a flowchart showing a method for determining empty aspiration. It is assumed that each step shown in FIG. 4 is executed by the control unit 24. Alternatively, each step may be executed by an abnormality determination control unit different from the control unit 24.

First, the control unit 24 reads data of a measurement value obtained by the pressure sensor 32, which is stored in a storage unit (not shown) (step S401).

Next, the control unit 24 calculates a predetermined index using the measurement value of the pressure sensor 32 (step S402). Here, an index calculated based on a value obtained by integrating measurement values of the pressure sensor 32 is used as the index in the present embodiment. Alternatively, an index calculated by another method may be used.

Thereafter, the control unit 24 determines whether the index satisfies a predetermined determination condition (step S403). An example in which whether the index is larger than a constant value k is used as a determination condition will be described below in the present embodiment, and other determination conditions may be used. When the index does not satisfy the determination condition, that is, when the index ≤ k, the control unit 24 determines that aspiration is normal (step S404).

On the other hand, when the index satisfies the determination condition in step S403, that is, when the index > k, the control unit 24 determines that there is an empty aspiration abnormality (step S405). At this time, the control unit 24 stops dispensing the reagent from the reagent bottle 4 (step S406). Further, the control unit 24 causes a display unit (not shown) to display an alert for notifying that there is an empty aspiration abnormality and that the dispensing of the reagent is stopped (step S407).

The abnormality determination processing shown in FIG. 4 may be executed at any time after the (3) reagent aspiration step in FIG. 3. However, it is desirable to prevent the reagent from being discharged into the reaction container 2 at the time of abnormality by executing the abnormality determination before the (5) second discharge step in FIG. 3.

### (Adjustment of Reagent Aspiration Amount)

Here, as a result of studies by the inventors, it has been found that when the amount of the reagent aspirated in the (3) reagent aspiration step is small, a difference between the index calculated at the time of normal aspiration and the index calculated at the time of empty aspiration is small, it is difficult to determine whether there is empty aspiration, and erroneous determination is likely to occur. Therefore, when the amount of the reagent to be used for analysis is smaller than a predetermined threshold value (first predetermined amount threshold value), a reagent aspiration amount is adjusted (increased) so that determination accuracy can be ensured in the present embodiment. That is, it is possible to accurately detect an empty aspiration abnormality while reducing a consumption amount of the reagent by aspirating an excessive reagent from the reagent bottle 4 in the (3) reagent aspiration step and discharging the excessively aspirated reagent back to the reagent bottle 4 in the (4) first discharge step.

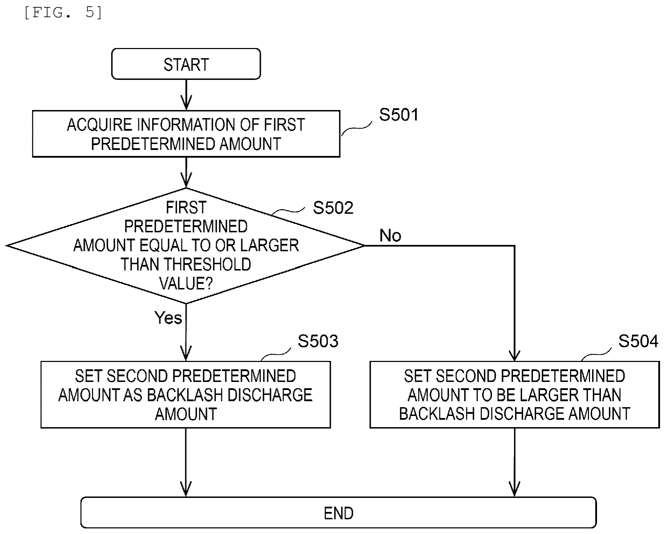

A specific method for adjusting the reagent aspiration amount will be described with reference to FIG. 5. FIG. 5 is a flowchart showing the method for adjusting the reagent aspiration amount.

First, the control unit 24 acquires a usage amount of the reagent corresponding to an analysis request item as the first predetermined amount (step S501).

Thereafter, the control unit 24 determines whether the first predetermined amount is equal to or larger than the first predetermined amount threshold value (step S502). When the first predetermined amount is equal to or larger than the first predetermined amount threshold value, the control unit 24 sets the second predetermined amount to a backlash discharge amount (constant value) (step S503).

On the other hand, when the first predetermined amount is smaller than the first predetermined amount threshold value, the control unit 24 sets the second predetermined amount to be larger than the backlash discharge amount (step S504).

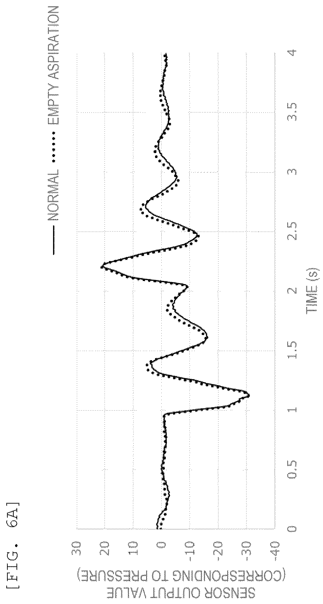

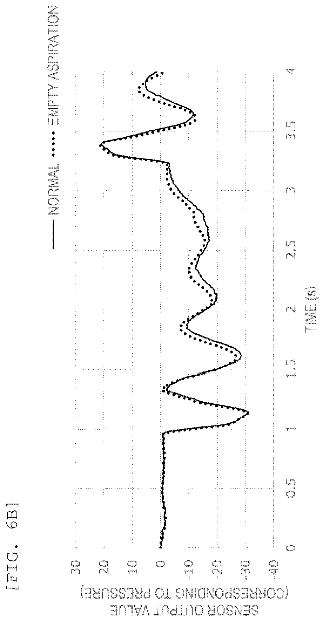

Next, an effect of adjusting the reagent aspiration amount will be described with reference to FIGS. 6A and 6B. In FIG. 6A and FIG. 6B, a vertical axis is an output value of the pressure sensor 32, but is not limited to a measurement value of the pressure, and may be a current value detected by the pressure sensor 32. Further, a backlash discharge amount of the syringe 25 used for acquiring pressure waveforms shown in FIGS. 6A and 6B is set to 2 µL.

### <Comparative Example>

First, an example (comparative example) in which the reagent aspiration amount is not adjusted will be described with reference to FIG. 6A.

FIG. 6A is a diagram showing an example of a pressure waveform during normal aspiration and a pressure waveform during empty aspiration when the first predetermined amount is 10 µL and the second predetermined amount is only the backlash discharge amount in the comparative example. Here, when the third predetermined amount in the case of FIG. 6A is assumed to be 5 µL, only 10 + 2 + 5 = 17 µL of the reagent is aspirated in the (3) reagent aspiration step in the comparative example. According to FIG. 6A, since the difference in pressure waveform is small between the normal aspiration and the empty aspiration, the difference between the respective indexes is also small. Therefore, it is difficult to set a determination condition for clearly determining empty aspiration, and it is not easy to accurately determine the empty aspiration.

### <Example>

Next, an example in which the reagent aspiration amount is adjusted will be described with reference to FIG. 6B. FIG. 6B is a diagram showing an example of a pressure waveform during normal aspiration and a pressure waveform during empty aspiration when the first predetermined amount is 10 µL and the second predetermined amount is backlash discharge amount + adjustment amount 40 µL in the example. Here, the third predetermined amount in the case of FIG. 6B is assumed to be 7 µL, 10 + 2 + 40 + 7 = 59 µL of the reagent is aspirated in the (3) reagent aspiration step in the example. According to FIG. 6B, since the difference in the pressure waveform is large between the normal aspiration and the empty aspiration, the difference between the respective indexes is also large. Therefore, it is easy to set a determination condition for clearly determining empty aspiration, and it is possible to accurately determine the empty aspiration.

Further, according to FIG. 6B, when the first predetermined amount is 50 µL or more, it can be seen that an aspiration amount of the reagent in the (3) reagent aspiration step is 59 µL or more, and empty aspiration can be accurately determined even when the second predetermined amount is only the backlash discharge amount. Therefore, in a case where a value of 50 µL or more is set as the first predetermined amount threshold value, when the first predetermined amount is the first predetermined amount threshold value or more, the second predetermined amount can be set to the backlash discharge amount (2 µL) regardless of the first predetermined amount.

On the other hand, when the first predetermined amount is smaller than the first predetermined amount threshold value, the second predetermined amount is set to be larger than the backlash discharge amount (2 µL), specifically, the sum of the first predetermined amount and the second predetermined amount is set to be the sum of the first predetermined amount threshold value and the backlash discharge amount. For example, when the first predetermined amount is 20 µL, the second predetermined amount is set to the backlash discharge amount (2 µL) + 30 µL, and the sum of the first predetermined amount and the second predetermined amount is set to be the same as the sum of the first predetermined amount threshold value (for example, 50 µL) and the backlash discharge amount (2 µL). Accordingly, even when an amount of the reagent used for analysis is small, it is possible to maintain good determination accuracy for empty aspiration. In the (4) first discharge step, the reagent diluted in the reagent nozzle 12, 14 is discharged back to the reagent bottle 4, but even when the second predetermined amount increases, since the number of times of discharging back does not increase, dilution of the reagent in the reagent bottle 4 is prevented to the same extent.

When the first predetermined amount is smaller than the first predetermined amount threshold value, the sum of the first predetermined amount and the second predetermined amount may be larger than the sum of the first predetermined amount threshold value and the backlash discharge amount. For example, when the first predetermined amount is 20 µL, the second predetermined amount may be the backlash discharge amount (2 µL) + 50 µL, and the sum of the first predetermined amount and the second predetermined amount may be larger than the sum of the first predetermined amount threshold value (for example, 50 µL) and the backlash discharge amount (2 µL).

Further, the first predetermined amount threshold value is not limited to 50 µL, and a different value may be used according to a type of the reagent, an inner diameter of the reagent nozzle 12, 14, sensitivity of the pressure sensor 32, and the like. For example, when the reagent contains an organic solvent (for example, acetonitrile), the pressure difference between normal aspiration and empty aspiration tends to be smaller than when the reagent does not contain an organic solvent, and thus the first predetermined amount threshold value may be set to a larger value.

### (Method for Setting Pressure Threshold Value)

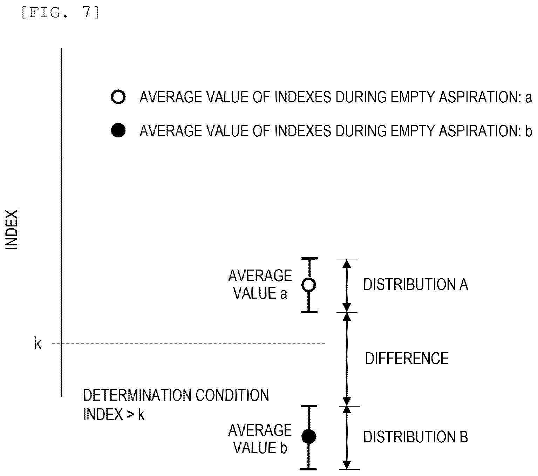

Hereinafter, an example of a method for setting a threshold value (pressure threshold value) for determining a dispensing abnormality will be described with reference to FIG. 7. FIG. 7 is a diagram showing an example of a method for setting a pressure threshold value for determining empty aspiration.

FIG. 7 shows an example in which the sum of the first predetermined amount and the second predetermined amount among a plurality of indexes calculated using a plurality of pieces of past pressure waveform data is the sum of a virtual value and a constant value (backlash discharge amount). It is assumed that an index distribution A during empty aspiration belongs to a range defined by a predetermined standard deviation from an average value a of the plurality of indices, and an index distribution B during normal aspiration belongs to a range defined by a predetermined standard deviation from an average value b of the plurality of indices.

Here, when the distribution A and the distribution B do not overlap each other, a condition including only the distribution A (in the example of FIG. 7, index > k) can be set as a determination condition for empty aspiration, and thus it can be said that the virtual value is suitable for the pressure threshold value. However, when the distribution A and the distribution B are close to each other, only a determination condition with low accuracy can be set as a determination condition, and the virtual value in this case cannot be regarded as appropriate as the pressure threshold value. Therefore, it is desirable to set the virtual value as the pressure threshold value such that a difference between the distribution A and the distribution B is equal to or larger than a certain amount.

### Reference Signs List

1: reaction disk
2: reaction container
3: reagent disk
4: reagent bottle
6: sample container
7: sample rack
8: sample transport mechanism
9: sample dispensing mechanism
10: sample nozzle
11, 13: reagent dispensing mechanism
12, 14: reagent nozzle
15: cleaning mechanism
17, 18: mixing mechanism
19: cleaning tank
20, 21: cleaning tank
22, 23: cleaning tank
24: control unit
25: syringe
26: tube
27: electromagnetic valve
28: liquid feeding pump
29: water supply pump
30: plunger
31: motor
32: pressure sensor

## Claims

1. An automatic analyzer comprising:
a dispensing mechanism configured to dispense a reagent from a reagent container to a reaction container;
a control unit configured to control the dispensing mechanism to aspirate an amount of the reagent used for analysis, the amount including at least a second predetermined amount in addition to a first predetermined amount, then discharge the second predetermined amount of the reagent to the reagent container, and then discharge the first predetermined amount of the reagent to the reaction container; and
a pressure sensor configured to measure pressure in the dispensing mechanism,
the control unit determining whether the reagent is normally aspirated based on a measurement value of the pressure sensor when the dispensing mechanism aspirates the reagent, wherein
when the first predetermined amount is equal to or larger than a first predetermined amount threshold value that is predetermined in advance, the second predetermined amount is a constant value regardless of the first predetermined amount, and
when the first predetermined amount is smaller than the first predetermined amount threshold value, the second predetermined amount is larger than the constant value.

2. The automatic analyzer according to claim 1, wherein
the constant value is a backlash discharge amount required to cancel a backlash that occurs when an operation direction of a syringe constituting the dispensing mechanism is reversed.

3. The automatic analyzer according to claim 1, wherein
when the first predetermined amount is smaller than the first predetermined amount threshold value, a sum of the first predetermined amount and the second predetermined amount is equal to or larger than a sum of the first predetermined amount threshold value and the constant value.

4. The automatic analyzer according to claim 1, wherein
when the first predetermined amount is smaller than the first predetermined amount threshold value, a sum of the first predetermined amount and the second predetermined amount is a sum of the first predetermined amount threshold value and the constant value.

5. The automatic analyzer according to claim 1, wherein
when the reagent contains an organic solvent, the first predetermined amount threshold value is larger than that when the reagent does not contain the organic solvent.

6. The automatic analyzer according to claim 1, wherein
the first predetermined amount threshold value is a value of 50 µL or more.

7. The automatic analyzer according to claim 1, wherein
the control unit calculates an index using the measurement value and determines whether the aspiration is normal or abnormal based on the index, and
when a sum of the first predetermined amount and the second predetermined amount is a sum of the first predetermined amount threshold value and the constant value, among the indexes calculated based on the measurement value,
a distribution when the aspiration is normal and a distribution when the aspiration is abnormal do not overlap with each other, and
a difference between the distributions is equal to or larger than a constant amount.

8. The automatic analyzer according to claim 7, wherein
the distribution is a range defined by a predetermined standard deviation with respect to an average value of a plurality of the indexes.

9. The automatic analyzer according to claim 7, wherein
the index is calculated based on a value obtained by integrating the measurement value.
